# EUROPÄISCHE PATENTSCHRIFT

(11) **EP 3 706 928 B1**
(45) Veröffentlichungstag und Bekanntmachung des Hinweises auf die Patenterteilung: **09.06.2021**
(21) Anmeldenummer: 18796922.5
(22) Anmeldetag: 02.11.2018
(51) Int. Cl.: B21B 31/07, F16J 15/16

(54) **WALZGERÜST MIT EINER DICHTUNG GEGEN EINEN AUSTRITT VON SCHMIERMITTEL**
ROLLING STAND HAVING A SEAL TO PREVENT LUBRICANT ESCAPING
CAGE DE LAMINOIR ÉQUIPÉE D'UN JOINT D'ÉTANCHÉITÉ PERMETTANT D'EMPÊCHER LA SORTIE DE LUBRIFIANT

(30) Priorität: 09.11.2017 DE 102017219935
(43) Veröffentlichungstag der Anmeldung: 16.09.2020
(73) Patentinhaber: SMS Group GmbH, 40237 Düsseldorf (DE)
(72) Erfinder: ALKEN, Johannes, 57076 Siegen (DE); KNIE, Daniel, 57258 Freudenberg (DE); TUCAK, Andrej, 57482 Wenden-Brün (DE); SEIDEL, Ralf, 35690 Dillenburg (DE); KIPPING, Matthias, 57562 Herdorf (DE)
(74) Vertreter: Kross, Ulrich
(86) Internationale Anmeldenummer: PCT/EP2018/079984
(87) Internationale Veröffentlichungsnummer: WO 2019/091861

(56) Entgegenhaltungen:
- EP-A1- 3 098 486
- DE-A1-102015 209 637
- US-A- 5 169 159

## Beschreibung

Die Erfindung betrifft ein Walzgerüst mit einer Dichtung zum Abdichten eines Schmiermittelraumes gegen einen Austritt von Schmiermittel.

Ringdichtungen mit Hohlräumen zur Realisierung einer dynamischen Dichtwirkung in Abhängigkeit der Druckverhältnisse in dem Ring - bzw. Schmiermittelspalt eines Lagers sind z. B. bekannt aus der US 5,169,159 oder der EP 3 098 486 A1. Walzgerüste mit Dichtungen, wie sie der vorliegenden Erfindung zugrunde liegen, sind im Stand der Technik grundsätzlich bekannt, z. B. aus den deutschen Offenlegungsschriften DE 10 2013 224 117 A1 oder DE 10 2015 209 637 A1. Beide Offenlegungsschriften offenbaren jeweils ein Walzgerüst mit mindestens einer Walze zum Walzen von insbesondere metallischem Walzgut. Die Walze weist zwei Walzenzapfen und einen Walzenballen auf. Das Walzgerüst weist Einbaustücke - hier beispielsweise jeweils mit einer Lagerbuchse - auf zum drehbaren Lagern der Walze in dem Walzgerüst. Die Einbaustücke bzw. die Lagerbuchsen spannen jeweils eine Aufnahmeöffnung auf zur Aufnahme von einem der Walzenzapfen, optional mit einer aufgezogenen Zapfenbuchse. Zwischen der Walze und dem Einbaustück ist ein Ringspalt ausgebildet zur Aufnahme eines Schmiermittels. Sowohl an seinem ballenseitigen wie auch an seinem ballenfernen Ende ist der Ringspalt durch eine an der Lagerbuchse lösbar befestigte Ringdichtung abgedichtet. Die Ringdichtung ist dabei so ausgelegt, dass sie einen seitlichen Abfluss des Schmiermittels aus dem Ringspalt in einem vorbestimmten Umfangswinkelbereich verhindert bzw. reduziert. Für diesen Zweck wurden aus dem Stand der Technik bekannte Dichtsysteme, wie z. B. Radialwellendichtringe oder Labyrinthdichtungen verwendet. Der Oberbegriff von Anspruch 1 basiert auf der DE 10 2015 209 637 A1.

Alle verwendeten bzw. ausprobierten Dichtungssysteme erwiesen sich jedoch aus folgenden Gründen als ungeeignet: Die Vorspannung, mit welcher die Ringdichtung in radialer Richtung auf den Walzenzapfen bzw. die Zapfenbuchse gedrückt wird, wird bei Auslegung des Walzgerüstes konstruktiv festgelegt. Die Vorspannung passt sich nicht dem in dem Ringspalt wirkenden zeitlich und örtlich variierenden Druck des Schmiermittels an. Die Folge ist, dass bei zu kleiner vorbestimmter Vorspannung eine nur unzureichende Abdichtung des Ringspaltes erfolgt; d. h. es kommt zu Leckagen. Im umgekehrten Fall, d. h. bei zu großer vorbestimmter Vorspannung ergibt sich eine erhöhte Reibung zwischen der Dichtung und dem Walzenzapfen bzw. der Zapfenbuchse, wodurch ein übermäßiger Verschleiß der Dichtung entsteht. Dieser erhöhte Verschleiß kann schnell zu einer Zerstörung der Dichtung führen. Außerdem kann es passieren, dass bei zu hoher Vorspannung die Dichtung durch Extrusion in einen Ringspalt mit geringem bzw. mit Atmosphärendruck zerstört wird. Die Dichtung extrudiert typischerweise nicht in den Ringspalt zwischen dem Walzenzapfen und dem Einbaustück, weil dort ein sehr hoher Gegendruck herrscht. Stattdessen besteht die Gefahr, dass die Dichtung in die entgegengesetzte Richtung extrudiert, weil dort eben kein Gegendruck herrscht.

Bekannt sind auch Ringdichtungen zur Abdichtung von Ringspalten in Walzgerüsten, welche jeweils an ihren dem Ringspalt zugewandten Seitenflächen eine zu dem Ringspalt hin geöffnete umlaufende Nut aufweisen.

Der Druck in dieser umlaufenden Nut - und damit die Dichtwirkung der Ringdichtung - ist jedoch in allen Umfangswinkelbereichen gleich, weil sich der Druck über den Umfang ausgleicht. Diese bekannte Ringdichtung mit umlaufender Nut ist deshalb nicht geeignet, in einzelnen Umfangswinkelbereichen wirkenden unterschiedlichen Druckverhältnissen durch unterschiedlich starke Dichtwirkungen Rechnung zu tragen.

Der Erfindung liegt die Aufgabe zugrunde, eine Dichtung in einem bekannten Walzgerüst dahingehend weiterzubilden, dass die Andrückkraft, mit welcher die Dichtung gegen eine Fläche in dem Walzgerüst, beispielsweise die Oberfläche der Zapfenbuchse bzw. des Walzenzapfens, gedrückt wird, geeignet an die lokalen Druckverhältnisse in dem abzudichtenden Ringspalt angepasst bzw. eingestellt wird.

Diese Aufgabe wird durch den Gegenstand des Anspruchs 1 gelöst.

Der Begriff "Lager" meint im Rahmen der vorliegenden Erfindung insbesondere - aber nicht nur - Ölfilmlager.

Bei der vorliegenden Erfindung sind zwei Arten von Ringspalten, nachfolgend auch Schmiermittelräume genannt, zu unterscheiden:
Ein erster Ringspalt bzw. Schmiermittelraum ist Teil des eigentlichen Lagers insbesondere Ölfilmlagers; er wird deshalb nachfolgend auch als Ringspalt bzw. Schmiermittelraum des Lagers bezeichnet. Er ist zwischen der Lagerbuchse und der Zapfenbuchse ausgebildet. Bei Ausführung des Walzgerüstes ohne Lagerbuchse und Zapfenbuchse befindet er sich zwischen dem Einbaustück und dem Walzenzapfen. Das Schmiermittel in diesem ersten Ringspalt trägt zumindest stellenweise die gesamte Belastung beim Walzbetrieb.

Ein zweiter Ringspalt bzw. Schmiermittelraum ist nicht Teil des eigentlichen Lagers, sondern grenzt an dieses an. Er wird nachfolgend auch Ringspalt bzw. Schmiermittelraum unter der Dichtung genannt. Er befindet sich zwischen der Lauffläche der Dichtung und der gegenüberliegenden Zapfenbuchse bzw. dem gegenüberliegenden Walzenzapfen. Wenn der erste Ringspalt beidseitig von jeweils einer Dichtung abgedichtet wird, gibt es zwei zweite Ringspalte unter den Dichtungen pro Walze in einem Walzgerüst.

Beide Ringspalte bzw. Schmiermittelräume stehen in fluidleitender Verbindung miteinander. Die radiale Höhe und damit das Volumen des ersten Ringspaltes sind jedoch deutlich größer als bei dem zweiten Ringspalt. Deshalb steht das Schmiermittel in dem ersten Ringspalt während des Betriebs des Walzgerüstes unter einem wesentlich größeren Druck als in dem zweiten Ringspalt. Der Druck in dem ersten Ringspalt ist jedoch typischerweise über den Umfang unterschiedlich verteilt.

Durch die beanspruchte fluidleitende Verbindung sind die Hohlräume in der Dichtung jeweils individuell fluidleitend mit dem unter Druck stehenden Schmiermittelraum des Lagers verbunden. Demzufolge füllen sich die Hohlräume bei Verwendung der Dichtung mit dem Schmiermittel und außerdem sind die Hohlräume dadurch auch demselben in Umfangsrichtung und zeitlich variierenden Druck ausgesetzt, wie das Schmiermittel in dem Schmiermittelraum des Lagers. Aufgrund der Elastizität des Materials, aus dem die Dichtung gefertigt ist, dehnen sich die Hohlräume je nach Stärke der Druckbeaufschlagung mehr oder weniger aus. Die Ausdehnung der Hohlräume führt aufgrund der isotropen Eigenschaften des Dichtungsmaterials zu einer Vergrößerung des Volumens der Dichtung und damit automatisch auch zu einer Vergrößerung der Andrückkraft, mit welcher die Dichtung auf eine abzudichtende Fläche, insbesondere eine Zapfenbuchse oder einen Walzenzapfen wirkt. Bei variablen Druckverhältnissen variiert dementsprechend auch das Volumen der Dichtung und die Andrückkraft. Anders ausgedrückt: Durch die beanspruchte Ausgestaltung der Dichtung wird vorteilhafterweise erreicht, dass die Andrückkraft mit den Druckverhältnissen in dem Schmiermittelraum des Lagers über den Umfang verteilt und zeitlich variiert bzw. dass sich die Andrückkraft automatisch in geeigneter Weise an die Druckverhältnisse in dem Schmiermittelraum anpasst. Die Anpassung der Andrückkraft an die in Umfangsrichtung unterschiedlichen Druckverhältnisse in dem Schmiermittelraum des Lagers wird bei der erfindungsgemäßen Dichtung insbesondere dadurch erreicht, dass keine umlaufende Nut, sondern eine Mehrzahl von in Umfangsrichtung getrennt voneinander ausgebildete Hohlräume vorgesehen sind, welche in unterschiedlichen Umfangsbereichen mit dem Schmiermittelraum des Lagers in fluidleitender Verbindung stehen.

Für das Funktionieren der erfindungsgemäßen Dichtung ist es wichtig, dass, wie gesagt, das Schmiermittel und der Druck, dem es ausgesetzt ist, in die Hohlräume gelangen kann; das heißt, es muss eine fluidleitende Verbindung zwischen den Hohlräumen und dem unter Druck stehenden Schmiermittelraum des Lagers bestehen. Diese fluidleitende Verbindung kann beispielsweise entweder dadurch realisiert sein, dass die Hohlräume als Aussparung an der Oberfläche der Dichtung ausgebildet und zu dem Schmiermittelraum des Lagers hin geöffnet sind und/oder dass die Hohlräume an der Oberfläche oder im Inneren der Dichtung über Zuführkanäle in den Schmiermittelraum des Lagers münden. Bei beiden Varianten stehen die Hohlräume in fluid- bzw. druckleitender Verbindung mit dem Schmiermittel in dem Schmiermittelraum des Lagers.

Durch eine Profilierung der Lauffläche der Dichtung können die Eigenschaften des Schmierfilms in dem zweiten Ringspalt zwischen der Dichtung und der Anlagefläche der Zapfenbuchse bzw. des Walzenzapfens eingestellt werden.

Die einzelnen Hohlräume in der Dichtung können in Form und Größe unterschiedlich ausgebildet sein; vorzugsweise sind sie gruppenweise unterschiedlich ausgebildet. Mit der Größe und Form der Hohlräume kann auch die Stärke der Andrückkraft gesteuert werden. Je größer die Hohlräume desto größer ist die erzielbare Volumenvergrößerung der Dichtung und damit einhergehend die erzielbare Andrückkraft und umgekehrt.

Gemäß einem weiteren Ausführungsbeispiel sind die einzelnen separaten Hohlräume in der Dichtung über die Länge bzw. den Umfang der Dichtung vorzugsweise gleichmäßig verteilt. Dies bietet den Vorteil, dass die Dichtung in jeder Umfangswinkellage die gleichen Eigenschaften und damit - ein gleicher Druck vorausgesetzt - eine gleiche Dichtwirkung erzielt werden kann.

Für die Verwendung der Dichtung in Walzgerüsten zur Abdichtung von Ringspalten, d. h. ringförmigen Schmiermittelspalten von Lagern ist die Ausbildung der Dichtung als Ringdichtung sinnvoll. Bei der Ausbildung als Ringdichtung ist die Lauf- bzw. Dichtfläche der Dichtung typischerweise an der Innenseite der Ringdichtung, d. h. dem Zentrum bzw. Mittelpunkt der Ringdichtung zugewandt ausgebildet. Dann ist gewährleistet, dass insbesondere bei der Verwendung der Dichtung an Walzenzapfen die Dichtfläche der äußeren Oberfläche der Walzenzapfen zugewandt ist.

Die Vorteile des beanspruchten Walzgerüstes entsprechen im Wesentlichen den oben mit Bezug auf die beanspruchte Dichtung genannten Vorteilen. Die Oberfläche des Walzenzapfens bildet jetzt die Anlagefläche, gegen welche die Dichtung mit ihrer Lauffläche angedrückt wird. Wie oben beschrieben, wird jetzt aufgrund der besonderen konstruktiven Ausgestaltung der Dichtung die Andrückkraft automatisch an das eventuell sehr hohe Druckniveau in dem Ringspalt zwischen Walzenzapfen und Einbaustück bzw. in den Ringspalt zwischen Walzenzapfen und Lauffläche der Dichtung angepasst.

Diese besagte Variation der Andrückkraft in Abhängigkeit der Druckverhältnisse in dem Ringspalt kann einer voreingestellten Vorspannung, mit welcher die Lauffläche der Dichtung auf eine Anlagefläche drückt, überlagert sein. Die auf diese Weise aus der Überlagerung von Vorspannung und variabler Andrückkraft realisierte radiale gesamte Andrückkraft ist so auszutarieren bzw. einzustellen, dass sie einerseits nicht zu groß, aber andererseits auch nicht zu klein ist. Die gesamte Andrückkraft darf nicht zu groß werden, weil ein Schmierfilm zwischen der Lauffläche der Dichtung und der Anlagefläche des rotierenden Walzenzapfens erhalten werden muss, um eine Festkörperreibung zwischen der Dichtung und dem rotierenden Walzenzapfen zu verhindern. Die Festkörperreibung hätte zur Folge, dass die Dichtung verschleißt und dadurch auf Dauer unbrauchbar bzw. zerstört werden würde. Andererseits darf die gesamte Dichtkraft auch nicht zu klein sein, damit die Dicke des Schmierfilms deutlich geringer wird als die Dicke/Höhe des ersten Ringspaltes zwischen dem Walzenzapfen und dem Einbaustück. Nur wenn die Dicke des Schmierfilms in dem zweiten Ringspalt deutlich geringer ist als die Dicke des Schmierfilms in dem ersten Ringspalt, kann die Dichtung auch die gewünschte - nicht absolute, aber weitgehende - Dichtwirkung bewirken.

Insbesondere bei hydrodynamischen Ölfilmlagern ist typischerweise keine vollumfängliche Abdichtung, sondern nur eine Abdichtung in einem bestimmten Umfangswinkelbereich, nämlich dort, wo die kleinste Schmierfilmdicke auftritt, gewünscht. Deshalb muss die Dichtung nicht zwingend notwendig als vollumfängliche Ringdichtung ausgebildet sein; vielmehr genügt z. B. für den besagten Anwendungsfall ein Dichtungsstreifen bzw. Ringsegment begrenzter Länge in dem besagten Umfangswinkelbereich.

Bei dem beanspruchten Walzgerüst ist an dem walzenballenseitigen Ende und/oder an dem walzenballenfernen Ende des Einbaustücks oder der Lagerbuchse eine zu dem Walzenzapfen hin geöffnete Nut ausgebildet. Die Nut dient zur Aufnahme der Ringdichtung.

Beispielsweise kann die axiale Außenseite der Nut, d. h. die der Lagerbuchse abgewandte Außenseite der Nut durch eine mit dem Einbaustück oder mit der Lagerbuchse lösbar verbindbare, beispielsweise verschraubbare Lochscheibe gebildet sein. Weil die Breite der Ringdichtung in unbelastetem Zustand größer ist als die Breite der Nut in axialer Richtung, dann kann durch das Anschrauben der Lochscheibe die Vorspannkraft eingestellt werden, mit welcher die Dichtung in radialer Richtung auf den Walzenzapfen wirkt. Grund dafür ist, dass sich die elastische Dichtung bei Einspannung in axialer Richtung in der Nut isotrop, d. h. auch in radialer Richtung ausdehnt. In Abhängigkeit des durch die Verschraubung ausgeübten Drucks in axialer Richtung kann auch die besagte Vorspannkraft in gewünschter Weise eingestellt werden.

Um Fertigungstoleranzen bei der Dichtung auszugleichen und um sicherzustellen, dass die Dichtung in ihrer axialen Breite in jedem Fall zumindest geringfügig größer ist als die Breite der Ringnut, ist es vorteilhaft, wenn die Ringdichtung an ihrer dem Einbaustück zugewandten Stirnseite und/oder an ihrer dem Einbaustück abgewandten Stirnseite mindestens eine Überhöhung aufweist.

Wie oben bereits ausgeführt, münden die Aussparungen oder Hohlräume direkt in diejenigen Oberflächenbereiche der Dichtung, die den unter Druck stehenden Schmiermittelraum des Lagers begrenzen. Alternativ oder zusätzlich können aber auch weitere Aussparungen an denjenigen Bereichen der Oberfläche der Dichtung ausgebildet sein, welche bei Einspannung der Dichtung in die Nut gegen deren Wände oder den Boden der Nut gedrückt werden und so durch das Andrücken abgedichtet werden. Diese weiteren Aussparungen bzw. Hohlräume stehen dann vorzugsweise über die Zuführkanäle mit dem Schmiermittelraum des Lagers in fluidleitender Verbindung.

An seiner/ihrer der Ringdichtung zugewandten Stirnseite kann das Einbaustück oder die Lagerbuchse vorzugsweise in axialer Richtung vorstehende Stifte aufweisen. Diese Stifte sind so angeordnet, dass sie in die besagten Aussparungen an der Oberfläche der Dichtung eingreifen. Die Stifte dienen dabei vorteilhafterweise zum einen als Verdrehsicherung für die Dichtung, insbesondere während des Walzbetriebs, und zum anderen zur Begrenzung der Verformung der Dichtung. Eine weitere Möglichkeit ist die radiale Anordnung der Stifte bei gleicher Funktionsweise.

Das Volumen der Aussparungen kann größer sein als das Volumen der Stifte, welche in eingebautem Zustand der Dichtung in die Aussparungen hineinragen. Diese Ausgestaltung bietet den Vorteil, dass trotz des Hineinragens der Stifte in die Aussparungen ein restlicher Hohlraum verbleibt, welcher, wenn er über einen Zuführkanal mit dem Ringspalt verbunden ist, als Hohlraum im Sinne der vorliegenden Erfindung fungieren kann.

Eine Ausbildung des Innendurchmessers der Ringdichtung größer als der Außendurchmesser des Walzenzapfens - optional mit aufgezogener Zapfenbuchse - auf axialer Höhe der Ringdichtung bietet den Vorteil, dass das durch das Einbaustück mit dem darin gelagerten Walzenzapfen gebildete Lager als Ölfilmlager betrieben werden kann. Voraussetzung dafür ist, dass die Ringdichtung den Ringspalt zwischen Lauffläche und Anlagefläche nur in einem begrenzten Umfangswinkelbereich, wo die minimale Schmierfilmdichte herrscht, bis auf den besagten Schmierfilm reduziert, während die Dichtung in dem übrigen Umfangswinkelbereich keine nennenswerte Dichtwirkung erzielen muss. Im Bereich der minimalen Schmierfilmdicke wird die gesamte Andrückkraft maximal und damit der Ringspalt bis auf den Schmierfilm reduziert. In dem übrigen Umfangswinkelbereich ist die Andrückkraft vernachlässigbar gering und das Schmiermittel kann dort aufgrund der Überdimensionierung der Ringdichtung an dieser vorbei in axialer Richtung aus dem Ringspalt austreten. Für den Betrieb als Ölfilmlager ist dies dann so gewollt.

Weitere vorteilhafte Ausgestaltungen der Dichtung und des Walzgerüstes mit der Dichtung sind Gegenstand der abhängigen Ansprüche.

Der Beschreibung sind 5 Figuren beigefügt, wobei
- Figur 1: die erfindungsgemäße Dichtung;
- Figur 2: ein Walzgerüst aus dem Stand der Technik;
- Figur 3: die Lagerung einer Walze in einem Einbaustück;
- Figur 4: die Ausbildung und Anordnung der Dichtung in der Lagerung nach Figur 3 in einer vergrößerten Ansicht; und
- Figur 5: einen Querschnitt durch den von einer Lagerbuchse oder einem Einbaustück aufgespannten Aufnahmeraum mit eingesetztem Walzenzapfen
zeigt.

Die Erfindung wird nachfolgend unter Bezugnahme auf die genannten Figuren in Form von Ausführungsbeispielen detailliert beschrieben. In allen Figuren sind gleiche technische Elemente mit gleichen Bezugszeichen bezeichnet.

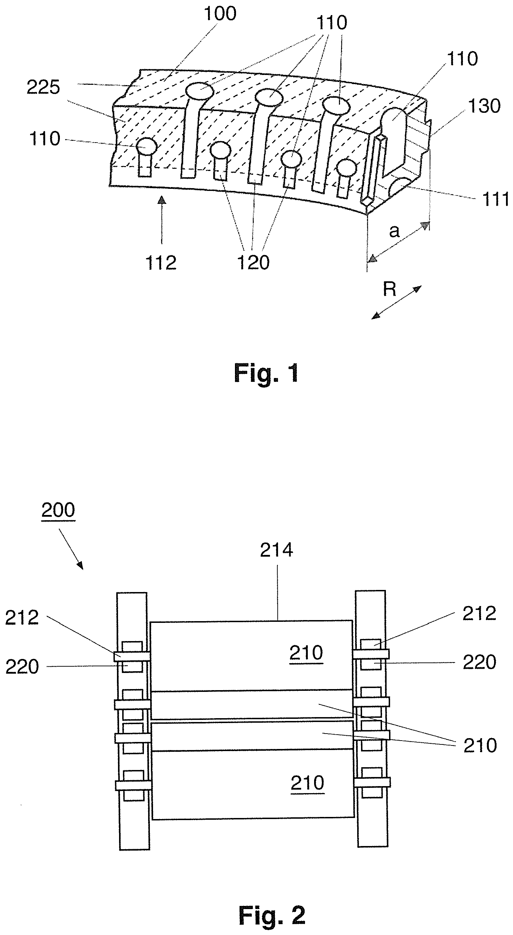

Figur 1 zeigt die erfindungsgemäß ausgebildete Dichtung 100. Sie kann zum Abdichten eines Schmiermittelraumes (in Figur 1 nicht gezeigt) gegen einen Austritt von Schmiermittel dienen. Sie ist zumindest teilweise aus einem elastischen Material gefertigt und weist in ihrem Inneren eine Mehrzahl von beliebig geformten Hohlräumen 110 auf. Die Hohlräume 110 sind in Figur 1 lediglich beispielhaft als zylindrische Aussparungen 110 ausgebildet, die zur Oberfläche der Dichtung hin geöffnet sind. Alternativ können die Hohlräume 110 auch vollständig im Inneren der Dichtung ausgebildet sein; sie sind dann über Zuführkanäle 120 fluidleitend mit der Oberfläche der Dichtung verbunden. Die Zuführkanäle dienen zum Zuführen des Schmiermittels aus dem Schmiermittelraum 300 eines Lagers, insbesondere eines Ölfilmlagers in die jeweiligen Hohlräume 110.

In Figur 1 bildet die Unterseite der Dichtung 100 eine Lauffläche 112, mit welcher die Dichtung gegen eine Anlagefläche eines typischerweise bewegten Objektes, z. B. eines Walzenzapfens, gedrückt wird.

Zumindest weitgehend münden die Aussparungen oder die Zuführkanäle 120 in einen abzudichtenden ersten Schmiermittelraum 300 des Lagers. Auf diese Weise wird sichergestellt, dass das Schmiermittel und der Druck aus dem ersten Ringspalt 300 in die Hohlräume übertragen wird. Es stellt sich dann in den Hohlräumen immer der eventuell variierende Druck aus dem Schmiermittelraum ein. Bezüglich des damit verbundenen Zweckes sei auf die obigen Ausführungen im allgemeinen Teil der Beschreibung verwiesen.

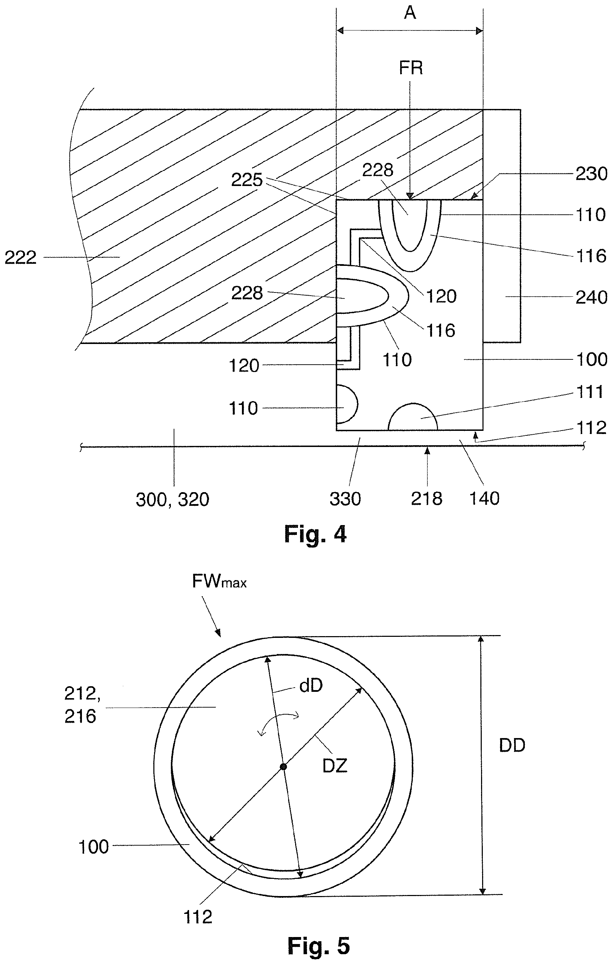

Das Bezugszeichen 225 und die Schraffur deuten Wandbereiche einer Nut an, in welche die Dichtung typischerweise einsetzbar ist. Diese Wandbereiche überdecken dann größtenteils Bereiche der Oberfläche der Dichtung. Lediglich die Zuführkanäle und/oder Aussparungen an den nicht überdeckten Bereichen der Oberfläche der Dichtung stehen mit dem ersten Schmiermittelraum 300 in fluidleitender Verbindung; siehe auch Figur 4.

Wie in Figur 1 zu erkennen ist, können die Aussparungen 110 auch zu anderen Oberflächenabschnitten der Dichtung als zu dem Schmiermittelraum 300 hin geöffnet sein. Dies ist insbesondere vorteilhaft für ein Zusammenwirken dieser Aussparungen mit nachfolgend noch beschriebenen Stiften an dem Einbaustück.

Figur 1 zeigt weiterhin beispielhaft eine erste Gruppe von Aussparungen 110 und eine zweite Gruppe von Aussparungen 110, wobei das Volumen der Aussparungen der ersten Gruppe jeweils größer ist als das Volumen der Aussparungen der zweiten Gruppe. Die unterschiedlichen Volumina bewirken bei jeweils gleichem zugeführtem Druck eine unterschiedliche Expansion der Dichtung und damit gegebenenfalls einen jeweils unterschiedlichen Anteil an einer von der Dichtung ausgeübten Dichtkraft.

Die Dichtung in Figur 1 hat eine Breite a; diese Breite entspricht beispielhaft auch der Breite der Lauffläche 112. Es ist weiterhin zu erkennen, dass die Dichtung beispielhaft einen rechteckigen Querschnitt aufweist. Die separaten Hohlräume 110 bzw. Aussparungen 110 sind über die Länge bzw. den Umfang der Dichtung vorzugsweise gleichmäßig verteilt angeordnet. Dies hat den Vorteil, dass die Dichtung 100 deshalb auch an jedem Punkt bzw. jedem Längenabschnitt die gleichen Eigenschaften aufweist. Zur Abdichtung von Zylindern, wie beispielsweise einem Walzenzapfen 212 kann die Dichtung 100 ringförmig als Ringdichtung ausgebildet sein; siehe Figur 5. Die Lauffläche 112 ist dann dem Zentrum bzw. dem Mittelpunkt der Ringdichtung oder anders ausgedrückt der Oberfläche bzw. Anlagefläche des Zylinders zugewandt ausgebildet; siehe Figur 5.

Figur 2 zeigt ein Walzgerüst gemäß dem Stand der Technik, wie es auch der vorliegenden Erfindung zugrunde liegt. Das Walzgerüst 200 weist mindestens eine, hier beispielhaft vier Walzen 210 auf mit jeweils zwei Walzenzapfen 212 und jeweils einem Walzenballen 214. Insbesondere die in Figur 2 gezeigten beiden mittleren Arbeitswalzen dienen zum Walzen von Walzgut. Die Walzen 210 sind mit ihren Walzenzapfen 212 jeweils in einem Einbaustück 220, auch Lagergehäuse genannt, drehbar gelagert.

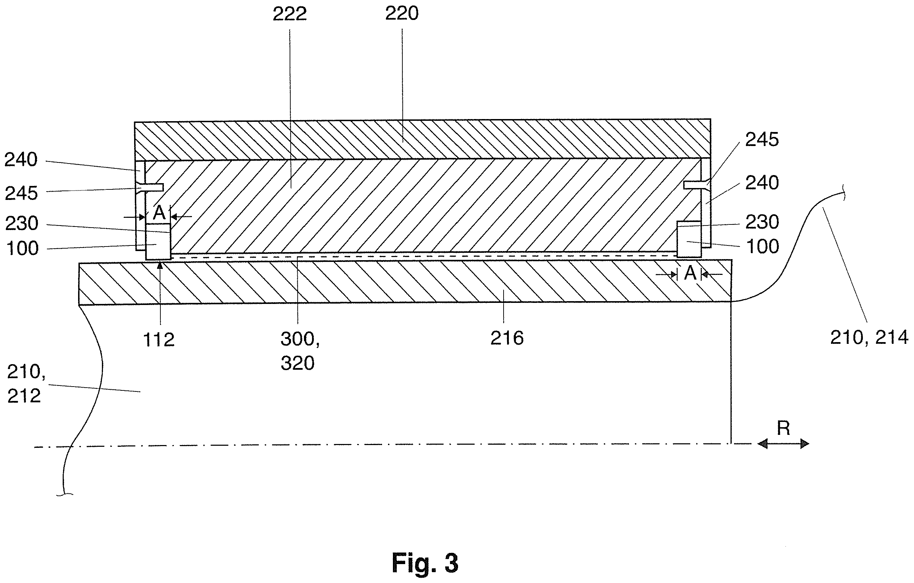

Figur 3 zeigt diese Lagerung in einem Längsschnitt im Detail. Zu erkennen ist die Walze 210 mit ihrem Walzenzapfen 212 und ihrem Walzenballen 214. Auf den Walzenzapfen ist eine Zapfenbuchse 216 aufgezogen. Der Walzenzapfen mit der Zapfenbuchse ist gelagert in einer Aufnahmeöffnung, die von einer Lagerbuchse 222 aufgespannt wird. Die Lagerbuchse 222 ist in dem Einbaustück 220 drehfest angeordnet. Zwischen der drehfest angeordneten Lagerbuchse 222 und der mit dem Walzenzapfen 212 rotierenden Zapfenbuchse 216 ist ein Ringspalt 300 ausgebildet, welcher während eines Betriebs des Walzgerüstes mit Schmiermittel 320 befüllt ist. Das Schmiermittel steht dann in dem Ringspalt unter einem hohen Druck, typischerweise von einigen 100 bar. In Figur 3 ist der Ringspalt 300 beispielhaft sowohl an seinem walzenballenseitigen Ende wie auch an seinem walzenballenfernen Ende durch die erfindungsgemäße Ringdichtung 100 abgedichtet. Die Ringdichtung 100 muss nicht über ihren gesamten Umfang erfindungsgemäß ausgebildet sein; grundsätzlich kann auch nur ein Abschnitt der Ringdichtung entsprechend ausgebildet sein.

In Figur 3 ist weiterhin zu erkennen, dass die Lagerbuchse 222 an ihrem walzenballenseitigen Ende und an ihrem walzenballenfernen Ende jeweils eine zu dem Walzenzapfen 212 hin geöffnete Nut 230 aufweist, in welche die Ringdichtung 100 eingesetzt ist. Die Außenseiten der beiden Nuten 230 sind bei dem in Figur 3 gezeigten Beispiel nicht durch die Lagerbuchse 222 gebildet. Vielmehr sind die Außenseiten der Nuten dort jeweils durch Lochscheiben 240 gebildet, welche mit Schrauben 245 an die Lagerbuchse 222 angeschraubt sind. Weil die Breite a der Ringdichtung 100 in unbelastetem Zustand und gegebenenfalls unter Berücksichtigung der Überhöhungen 130, siehe Figur 1 in axialer Richtung R erfindungsgemäß bewusst geringfügig größer gestaltet sind als die durch die Lagerbuchse 222 konstruktiv vorgegebene Breite A der Nut, ist es möglich, dass durch das Anziehen der Schrauben 245 die axiale Kraft, mit welcher die Ringdichtungen 100 in der Nut gequetscht werden, variabel eingestellt werden kann. Aufgrund des isotropen Verhaltens des Materials der Dichtung 100 bewirkt die axiale Quetschung bzw. Stauchung nicht nur eine Reduzierung der Ringdichtung in ihrer Breite, sondern auch eine Expansion der Ringdichtung in radialer Richtung. Eine Variation der axialen Einspannkraft bewirkt deshalb automatisch auch eine Variation der Vorspannung bzw. der radialen Andrückkraft, mit welcher die Lauffläche 112 der Dichtung 100 gegen die gegenüberliegende Anlagefläche der Zapfenbuchse 216 gedrückt wird.

Figur 4 zeigt den Einbau der Dichtung 100 in die Lagerbuchse 222 nochmals im Detail.

Das Bezugszeichen 225 bezeichnet die Wandbereiche der Nut in dem Einbaustück oder der Lagerbuchse, gegen welche die Dichtung 100 bei Einbau in die Nut gedrückt wird. Anders ausgedrückt wird die Dichtung und werden die Hohlräume an der Oberfläche der Dichtung gegebenenfalls durch diese Wandbereiche abgedeckt und abgedichtet. Lediglich radial weiter innen angeordnete Hohlräume oder Zuführkanäle münden in den ersten Ringspalt 300. Zu erkennen ist weiterhin, dass die Dicke des Schmierfilms 330 in dem zweiten Ringspalt 140 zwischen der Lauffläche 112 der Dichtung 100 und der gegenüberliegenden Anlagefläche 218 der Zapfenbuchse 216 wesentlich geringer ist als die Dicke des Ringspaltes 300. Dies wird dadurch erreicht, dass die Ringdichtung 100 in radialer Richtung weitgehend in den dort ursprünglich vorhandenen Ringspalt 300 hineinragt. In Figur 4 sind die Größenverhältnisse überzeichnet dargestellt. Tatsächlich drückt die Ringdichtung aufgrund der radialen Andrückkraft FR auf die Anlagefläche 218 der Zapfenbuchse 216. Aufgrund der besagten hohen Druckverhältnisse bildet sich aber dennoch zwischen der Lauffläche 112 und der Anlagefläche 218 der besagte Schmierfilm 330 mit einer Dicke von nur wenigen µm aus. Der Druck in dem ersten Ringspalt 300 ist wesentlich größer als in dem zweiten Ringspalt 140.

Es ist weiterhin zu erkennen, dass die Ringdichtung 100 derart in die Nut 230 eingesetzt ist, dass ihre Aussparungen 110 mit Stiften 228, die sich von der die Nut 230 begrenzenden Stirnseite der Lagerbuchse 222 vorzugsweise in axialer Richtung R erstrecken, in Eingriff stehen. Bei Ausführung von radial angeordneten Hohlräumen erstrecken sich die Stifte senkrecht zur axialen Richtung. Der verbleibende Hohlraum 116 ist aufgrund der axialen bzw. radialen Andrückkraft, mit welcher die Ringdichtung 100 mit Hilfe der Lochscheibe 240 in die Nut gedrückt wird, zu der Lagerbuchse 222 hin abgedichtet; er fungiert deshalb als Hohlraum 110 im Sinne der Erfindung, der über einen Zuführkanal 120 in den Schmiermittelraum 300 des (Ölfilm-)Lagers mündet. Der durch den Zuführkanal bewirkte Effekt der Variation, insbesondere der Vergrößerung, der radialen Gesamtkraft in Abhängigkeit der Druckverhältnisse im Bereich des Schmierfilms 330 wurde oben ausführlich beschrieben.

Figur 5 wurde einleitend bereits kurz beschrieben. Sie zeigt einen Querschnitt durch den von der Lagerbuchse aufgespannten Aufnahmeraum zur Aufnahme des Walzenzapfens 212. Wie aus einer Zusammenschau der Figuren 4 und 5 erkennbar ist, wird der Aufnahmeraum nicht nur durch die Lagerbuchse 222, sondern insbesondere auch durch die typischerweise weiter nach innen ragende Ringdichtung 100 in radialer Richtung begrenzt. Im Inneren des Aufnahmeraumes rotiert der Walzenzapfen 212, gegebenenfalls mit aufgezogener Zapfenbuchse 216. Für einen Betrieb des Walzenlagers als hydrodynamisches Ölfilmlager ist der Innendurchmesser dD der Ringdichtung 100 größer als der Außendurchmesser DZ des Walzenzapfens 212 auf axialer Höhe der Ringdichtung, optional mit aufgezogener Zapfenbuchse 216. Während des Betriebs als hydrodynamisches Ölfilmlager drückt sich die Ringdichtung 100 dann lediglich im Umfangswinkelbereich des minimalen Schmierfilmes, welcher in etwa im Bereich der maximal wirkenden Walzkraft FWmax liegt, so eng an die Oberfläche bzw. Anlagefläche 218 des Walzenzapfens an, dass sich dort nur noch der Schmierfilm 330 ausbildet. In dem übrigen Umfangswinkelbereich liegt die Lauffläche 112 der Ringdichtung 100 nicht mehr an der Anlagefläche 218 des Walzenzapfens 212 an; vielmehr ist der Abstand zwischen diesen beiden Flächen größer als die Dicke des Schmierfilms im Bereich der maximalen Walzkraft; dies gilt insbesondere aufgrund der besagten Überdimensionierung der Ringdichtung 100. Die besagte Überdimensionierung und der dadurch bedingte größere Spalt zwischen Lauffläche 112 und Anlagefläche 218 ermöglicht vorteilhafterweise einen axialen Abfluss von Schmiermittel in dem Umfangswinkelbereich außerhalb des Bereiches der maximalen Walzkraft. Der Außendurchmesser DD der Ringdichtung 100 entspricht typischerweise dem Innendurchmesser des Bodens der Nut 230.

### Bezugszeichenliste

- 100: Dichtung
- 110: Hohlraum bzw. Aussparung
- 111: Laufflächenprofilierung
- 112: Lauffläche
- 116: verbleibender Hohlraum
- 120: Zuführkanal
- 130: Überhöhung
- 140: Ringspalt bzw. Schmiermittelraum unter der Dichtung

- 200: Walzgerüst
- 210: Walze
- 212: Walzenzapfen
- 214: Walzenballen
- 216: Zapfenbuchse
- 218: Anlagefläche
- 220: Einbaustück
- 222: Lagerbuchse
- 225: Wandbereiche der Nut
- 228: Stift
- 230: Nut
- 240: Lochscheibe
- 245: Schraube

- 300: Ringspalt bzw. Schmiermittelraum des Lagers
- 320: Schmiermittel
- 330: Schmierfilm
- a: Breite der Ringdichtung in axialer Richtung
- A: Breite der Nut in axialer Richtung
- DD: Außendurchmesser der Ringdichtung
- DZ: Außendurchmesser des Walzenzapfens ggf. mit Zapfenbuchse
- dD: Innendurchmesser der Ringdichtung

- R: axiale Richtung
- FR: radiale Andrückkraft auf die Dichtung
- FWmax: maximale Walzkraft

## Patentansprüche

1. Walzgerüst (200) aufweisend:
mindestens eine Walze (210) mit zwei Walzenzapfen (212) und einem Walzenballen (214) zum Walzen von einem Walzgut;
mindestens ein Einbaustück (220) - optional mit einer Lagerbuchse (222) - zum drehbaren Lagern der Walze (210) in dem Walzgerüst (200), wobei das Einbaustück (220) oder die Lagerbuchse eine Aufnahmeöffnung aufspannt zur Aufnahme von einem der Walzenzapfen (212) - optional mit einer aufgezogenen Zapfenbuchse (216) - , wobei der Innendurchmesser der Aufnahmeöffnung gegenüber dem Außendurchmesser des Walzenzapfens - optional mit aufgezogener Zapfenbuchse - derart größer ausgebildet ist, dass zwischen dem Einbaustück bzw. der Lagerbuchse und dem Walzenzapfen bzw. der Zapfenbuchse ein Ringspalt (300) zur Aufnahme eines Schmiermittels (320) ausgebildet ist; und
eine an dem walzenballenseitigen Ende und/oder eine an dem walzenballenfernen Ende des Einbaustücks (220) oder der Lagerbuchse (222) gegenüber der drehbaren Walze drehfest angeordnete Dichtung zum Abdichten des Ringspaltes, welcher einen Schmiermittelraum repräsentiert, zumindest in einem vorbestimmten Umfangswinkelbereich;
**dadurch gekennzeichnet,**
**dass** die Dichtung (100) mindestens teilweise aus einem elastischen Material gebildet ist,
**dass** die Dichtung mindestens zwei in Umfangsrichtung voneinander getrennte Hohlräume (110) aufweist, welche zu dem Schmiermittelraum des Lagers hin geöffnet sind zum Zuführen des Schmiermittels (320) aus dem abzudichtenden Schmiermittelraum (300) des Lagers in die Hohlräume;
**dass** an dem walzenballenseitigen Ende und/oder an dem walzenballenfernen Ende des Einbaustücks (220) oder der Lagerbuchse (222) eine zu dem Walzenzapfen (212) hin geöffnete Nut (230) ausgebildet ist, in weiche die Dichtung (100) einsetzbar ist; und
**dass** die axiale Breite a der Dichtung (100) in unbelastetem Zustand größer ist als die Breite A der Nut (230) in axialer Richtung R.

2. Walzgerüst nach Anspruch 1,
**dadurch gekennzeichnet,**
**dass** die Dichtung (100) als Ringsegment ausgebildet ist und eine vorbestimmte begrenzte Länge L aufweist für welche gilt:
L < Gesamtumfang des Ringspaltes.

3. Walzgerüst nach Anspruch 1,
**dadurch gekennzeichnet,**
**dass** die Dichtung (100) in Form einer Ringdichtung ausgebildet ist.

4. Walzgerüst (200) nach Anspruch 3,
**dadurch gekennzeichnet,**
**dass** der Außendurchmesser (DD) der Ringdichtung in unbelastetem Zustand im Wesentlichen gleich dem Durchmesser der Nut (240) an ihrem Boden ist.

5. Walzgerüst (200) nach einem der Ansprüche 3 oder 4,
**dadurch gekennzeichnet,**
**dass** der Innendurchmesser (dD) der Ringdichtung (100) größer als der Außendurchmesser (DZ) des Walzenzapfens (212) - optional mit aufgezogener Zapfenbuchse (216) - auf axialer Höhe der Ringdichtung ist.

6. Walzgerüst (200) nach Anspruch 1,
**dadurch gekennzeichnet,**
**dass** die axiale Außenseite der Nut durch eine mit dem Einbaustück oder mit der Lagerbuchse (222) lösbar verbindbare, beispielsweise verschraubbare Lochscheibe (240) gebildet ist.

7. Walzgerüst (200) nach einem der Ansprüche 1 bis 6
**dadurch gekennzeichnet,**
**dass** die Dichtung (100) an ihrer dem Einbaustück abgewandten und/oder zugewandten Stirnseite mindestens eine Überhöhung (130) aufweist.

8. Walzgerüst (200) nach Anspruch 1 bis 7,
**dadurch gekennzeichnet,**
**dass** die Dichtung (100) einen rechteckförmigen Querschnitt aufweist; und dass die Dichtfläche der Dichtung dem Walzenzapfen zugewandt ist.

9. Walzgerüst (200) nach einem der Ansprüche 1 bis 8,
**dadurch gekennzeichnet,**
**dass** die Aussparungen (110) an der Oberfläche der Ringdichtung auch zu dem Einbaustück (220) oder zu der Lagerbuchse (222) hin geöffnet ausgebildet sind.

10. Walzgerüst (200) nach Anspruch 9,
**dadurch gekennzeichnet,**
**dass** das Einbaustück (220) oder die Lagerbuchse (222) an seiner /ihrer der Dichtung zugewandten Stirnseite in axialer oder radialer Richtung vorstehende Stifte (228) aufweist zum Eingreifen in die Aussparungen (110) an der Oberfläche der Dichtung (100).

11. Walzgerüst (200) nach Anspruch 10,
**dadurch gekennzeichnet,**
**dass** das Volumen der Aussparungen (110), in welche die Stifte hineinragen, größer ist als das Volumen der in die Aussparungen eingreifenden Stifte (228).

## Claims

1. Roll stand (200) comprising:
at least one roll (210) with two roll journals (212) and a roll barrel (214) for the rolling of a rolling material;
at least one chock (220), optionally with a bearing bush (222), for rotatable mounting of the roll (210) in the roll stand (200), wherein the chock (220) or the bearing bush spans a receiving opening for reception of one of the roll journals (212), optionally with a drawn-on journal bush (216), wherein the inner diameter of the receiving opening is formed to be larger by comparison with the outer diameter of the roll journal, optionally with drawn-on journal bush, in such a way that an annular gap (300) for receiving a lubricant (320) is formed between the chock or the bearing bush and the roll journal or the journal bush; and
a seal, which is arranged at the end at the chock (220) or bearing bush (222) at the roll barrel side and/or at the end of the chock (220) or bearing bush (222) remote from the roll barrel to be secure against rotation relative to the rotatable roll, for sealing the annular gap - which represents a lubricant chamber - at least in a predetermined circumferential angular region;
**characterised in that**
the seal (100) is formed at least partly from a resilient material;
the seal has at least two cavities (110) which are separate from one another in circumferential direction and which are open towards the lubricant chamber of the bearing in order to feed the lubricant (320) from the lubricant chamber (300), which is to be sealed, of the bearing to the cavities;
a groove (230) which is open towards the roll journal (212) and into which the seal (100) is insertable is formed at the end of the chock (220) or bearing bush (222) at the roll barrel side and/or at the end of the chock (220) or bearing bush (222) remote from the roll barrel; and the axial width a of the seal (100) in unloaded state is greater than the width A of the groove (230) in axial direction R.

2. Roll stand according to claim 1, **characterised in that** the seal (100) is constructed as a segment of a ring and has a predetermined limited length L in which L < total circumference of the annular gap.

3. Roll stand according to claim 1, **characterised in that** the seal (100) is constructed in the form of an annular seal.

4. Roll stand (200) according to claim 3, **characterised in that** the outer diameter (DD) of the annular seal in unloaded state is substantially equal to the diameter of the groove (240) at the base thereof.

5. Roll stand (200) according to one of claims 3 and 4, **characterised in that** the inner diameter (dD) of the annular seal (100) is greater than the outer diameter (DZ) of the roll journal (212), optionally with drawn-on journal bush (216), at the axial height of the annular seal.

6. Roll stand (200) according to claim 1, **characterised in that** the axial outer side of the groove is formed by an apertured disc (240) which is detachably connectible, for example screw-connectible, with the chock or the bearing bush (222).

7. Roll stand (200) according to any one of claims 1 to 6, **characterised in that** the seal (100) has at least one elevation (130) at the end thereof remote from and/or facing the chock.

8. Roll stand (200) according to claims 1 to 7, **characterised in that** the seal (100) has a rectangular cross-section and the sealing surface of the seal faces the roll journal.

9. Roll stand (200) according to any one of claims 1 to 8, **characterised in that** the recesses (110) at the surface of the annular seal are also formed to be open towards the chock (220) or the bearing bush (222).

10. Roll stand (200) according to claim 9, **characterised in that** the chock (220) or the bearing bush (222) has, at the end face thereof facing the seal, pins (228), which project in axial or radial direction, for engagement in the recesses (110) at the surface of the seal (100).

11. Roll stand (200) according to claim 10, **characterised in that** the volume of the recesses (110) into which the pins project is greater than the volume of the pins (228) engaging in the recesses.

## Revendications

1. Cage de laminoir (200) qui présente :
au moins un cylindre (210) qui comprend deux tourillons de cylindre (212) et une table du cylindre (214), qui est destiné au laminage d'un produit de laminage ;
au moins une empoise (220) - qui comprend de manière facultative un coussinet de palier (222) - destinée au montage en rotation du cylindre (210) dans la cage de laminoir (200) ; dans laquelle l'empoise (220) ou le coussinet de palier enserre une ouverture de réception qui est destinée à la réception d'un des tourillons de cylindre (212) - de manière facultative après avoir procédé au montage d'un tourillon de cylindre (216) -, dans laquelle le diamètre interne de l'ouverture de réception est réalisé pour être supérieur au diamètre externe du tourillon de cylindre - de manière facultative après avoir procédé au montage du tourillon de cylindre (216) - d'une manière telle que l'on obtient, entre l'empoise, respectivement le coussinet de palier et le tourillon de cylindre, respectivement le coussinet de tourillon, un espace libre de forme annulaire (300) qui est destiné à la réception d'un agent de lubrification (320) ; et
un joint d'étanchéité disposé à l'extrémité du côté de la table de cylindre et/ou un joint d'étanchéité disposé à l'extrémité de l'empoise (220) ou du coussinet de palier, éloignée de la table du cylindre, qui est/sont monté(s) en antirotation par rapport au cylindre rotatif, destiné(s) à l'étanchéisation de l'espace libre de forme annulaire qui représente un espace libre destiné à un agent de lubrification, au moins dans une zone angulaire périphérique qui a été prédéterminée ;
**caractérisée en ce que**
le joint d'étanchéité (100) est formé, au moins en partie, à partir d'un matériau élastique ;
**en ce que** le joint d'étanchéité présente au moins deux espaces creux (110) qui sont espacés l'un de l'autre dans la direction périphérique, qui sont ouverts dans la direction de l'espace libre du palier destiné à l'agent de lubrification, à des fins d'acheminement de l'agent de lubrification (320) à partir de l'espace libre (300) du palier qui doit être rendu étanche, destiné à l'agent de lubrification, jusque dans les espaces creux ;
**en ce que**, à l'extrémité du côté de la table du cylindre et/ou à l'extrémité de l'empoise (220) ou du coussinet de palier (222), éloignée de la table du cylindre, on réalise une rainure (230) qui est ouverte dans la direction du tourillon de cylindre (212), dans laquelle peut venir s'insérer le joint d'étanchéité (100) ; et
**en ce que** la largeur axiale a du joint d'étanchéité (100) à l'état non sollicité est supérieure à la largeur A de la rainure (230) dans la direction axiale R.

2. Cage de laminoir selon la revendication 1, **caractérisée en ce que** le joint d'étanchéité (100) est réalisé sous la forme d'un segment annulaire et présente une longueur limitée L qui a été prédéfinie conformément à l'équation :
L < périphérie totale de l'espace libre de forme annulaire.

3. Cage de laminoir selon la revendication 1, **caractérisée en ce que** le joint d'étanchéité (100) est réalisé sous la forme d'un joint d'étanchéité de forme annulaire.

4. Cage de laminoir (200) selon la revendication 3, **caractérisée en ce que** le diamètre externe (DD) du joint d'étanchéité de forme annulaire, à l'état non sollicité, est essentiellement égale au diamètre de la rainure (240) à la base de cette dernière.

5. Cage de laminoir (200) selon l'une quelconque des revendications 3 et 4, **caractérisée en ce que** le diamètre interne (dD) du joint d'étanchéité (100) de forme annulaire est supérieur au diamètre externe (DZ) du tourillon de cylindre (212) - de manière facultative après avoir procédé au montage du tourillon de cylindre (216) - à la hauteur axiale du joint d'étanchéité de forme annulaire.

6. Cage de laminoir (200) selon la revendication 1, **caractérisée en ce que** le côté externe axial de la rainure est réalisé par l'intermédiaire d'une rondelle perforée (240) qui peut être reliée de manière amovible, par exemple qui peut être vissée à l'empoise ou au coussinet de palier (222).

7. Cage de laminoir (200) selon l'une quelconque des revendications 1 à 6, **caractérisée en ce que** joint d'étanchéité (100) présente, sur son côté avant qui se détourne de l'empoise et/ou qui est orienté dans la direction de l'empoise, au moins une surélévation (130).

8. Cage de laminoir (200) selon l'une quelconque des revendications 1 à 7, **caractérisée en ce que** le joint d'étanchéité (100) présente une section transversale de forme rectangulaire ; et **en ce que** la surface d'étanchéité du joint d'étanchéité est tournée vers le tourillon de cylindre.

9. Cage de laminoir (200) selon l'une quelconque des revendications 1 à 8, **caractérisée en ce que** les évidements (110) à la surface du joint d'étanchéité de forme annulaire sont également réalisés en étant ouverts dans la direction de l'empoise (220) ou dans la direction du coussinet de palier (222).

10. Cage de laminoir (200) selon la revendication 9, **caractérisée en ce que** l'empoise (220) ou le coussinet de palier (222) présente sur son côté avant tourné dans la direction du joint d'étanchéité, des broches (228) qui font saillie dans la direction axiale ou dans la direction radiale qui sont destinées à venir s'insérer dans les évidements (110) qui sont prévus à la surface du joint d'étanchéité (100).

11. Cage de laminoir (200) selon la revendication 10, **caractérisée en ce que** le volume des évidements (110), dans lesquels viennent s'insérer les broches, est supérieur au volume des broches (228) qui viennent s'insérer dans les évidements.
